# DEMANDE DE BREVET EUROPEEN

(11) **EP 1 755 338 A1**
(43) Date de publication de la demande: **21.02.2007**
(21) Numéro de dépôt: 06119190.4
(22) Date de dépôt: 18.08.2006
(51) Int. Cl.: H04N 7/16, H04N 7/24

(54) **Méthode et dispositif pour la transmission et réception de données multimédia chiffrés**

(30) Priorité: 19.08.2005 FR 0508644
(71) Demandeur: FRANCE TELECOM, 75015 Paris (FR)
(72) Inventeur: Picaud, Mickaël, 35830 BETTON (FR); Codet, André, 35200 RENNES (FR)
(74) Mandataire: Bioret, Ludovic

(57) **Abrégé**

L'invention concerne la mise en oeuvre d'un ensemble de flux de données multimédia liés entre eux, chacun desdits flux étant formé d'unités élémentaires de données, comprenant :
- au moins un flux crypté (21), comprenant des unités élémentaires cryptées à l'aide de clés variant dans le temps, lesdites unités élémentaires comprenant :
- des unités élémentaires autonomes (211), codées de façon autonome, formant chacune un point d'accès direct audit flux ;
- des unités élémentaires intermédiaires, codées à partir d'une unité élémentaire autonome précédente ;

- au moins un flux de données de cryptage (23), formé d'unités élémentaires et délivrant lesdites clés.

Selon l'invention, au moins certaines des unités élémentaires dudit flux de données de cryptage portent un ensemble de clés (231) comprenant au moins une clé courante et au moins une clé précédente, utilisée avant ladite clé courante, de façon à permettre des accès directs auxdites données.

## Description

### 1. Domaine de l'invention

Le domaine de l'invention est celui de la transmission de données multimédia vers un ou plusieurs terminaux, et plus précisément de données organisées en un ou plusieurs flux, dont au moins un flux crypté à l'aide de clés de cryptage modifiées périodiquement.

Une application particulière de l'invention est ainsi le standard MPEG4, qui prévoit que les données des différents flux peuvent être sécurisées, grâce à des clés de cryptage, ou clés de chiffrement, dont les combinaisons peuvent varier dans le temps.

L'invention se place notamment dans le cadre des systèmes permettant un accès direct (en anglais « random access ») à des positions particulières d'un flux, et non uniquement au début des flux. C'est notamment le cas de la norme MPEG4, qui offre de nombreuses fonctionnalités à l'utilisateur, parmi lesquelles l'accès direct à des positions choisies par celui-ci dans l'ensemble du contenu multimédia en cours de lecture.

### 2. Solutions de l'art antérieur

### 2.1 Transmission de flux multimedia

Il est possible de transporter et/ou d'utiliser des données multimédias par des moyens variés : un utilisateur peut disposer d'une séquence audiovisuelle sur un support CD ou DVD, ou exploiter de telles séquences stockées sous forme de fichiers par exemple sur le disque dur de son ordinateur et les faire « lire » par un lecteur de fichier local.

La lecture de telles données peut également s'exécuter en temps réel, c'est-à-dire sans même attendre que le fichier multimédia soit totalement téléchargé depuis un serveur. L'utilisateur peut alors recevoir, sur son ordinateur personnel ou son téléphone mobile, une vidéo en « streaming ». Ce système est connu sous le nom de Vidéo à la demande (ou « VoD », en anglais, pour « Video on Demand »). L'utilisateur accède pour cela à un serveur de données multimédia, qui peut être aussi bien local (réseau interne par exemple) que détaché (station de base pour un téléphone mobile).

Il est généralement prévu que ces vidéos, organisées sous la forme d'un ensemble de flux (vidéo et audio notamment), soient cryptées. Un flux spécifique de cryptage délivre au moins une clé courante, dans le cas où cette clé varie périodiquement.

Les normes et standards du domaine du multimédia spécifient déjà avec précision comment structurer de tels flux pour assurer la compatibilité entre tous les appareils lecteurs ou émetteurs.

Cependant, la variété des transferts, débits, supports, lecteurs de flux multimédia nécessite une sécurité accrue des données, pour éviter toute perte ou dégradation. Aussi, cette diversité d'utilisation des flux multimédia s'amplifie sans cesse, et évolue constamment. Par conséquent, les standards de normalisation ne couvrent pas forcément de manière exhaustive les contraintes occasionnées par ces aspects nouveaux, notamment concernant le cryptage, de plus en plus fréquemment variable dans le temps, des données multimédia.

### 2.2 Exemple : MPEG-4

Dans un souci de simplification, on présente ci-après les inconvénients de l'art antérieur en relation avec le standard particulier MPEG4 ainsi que ses extensions particulières qui spécifient le système de messagerie permettant la sécurisation des données multimédia à transporter. Il est clair cependant que cette discussion peut être transposée à d'autres systèmes, normes ou standards sécurisés avec des clés de cryptage variant au fil du temps et dont le lecteur de tels flux doit pouvoir répondre à des demandes d'accès direct.

Tout d'abord, il est nécessaire de rappeler que, dans un objectif d'optimisation en compression, certaines données de media ne sont pas codées indépendamment les unes des autres. Le flux est en effet composé d'un certain nombre de données élémentaires autonomes (par exemple une image Intra I pour un flux vidéo du standard MPEG4), à partir desquelles est codé le reste des données élémentaires contenues dans le flux, appelées données élémentaires intermédiaires (par exemple des images P prédites à partir d'une image 1 précédente).

Dans le cas de la norme MPEG4, les données élémentaires se présentent sous la forme d'une encapsulation pour leur transfert selon un mécanisme standardisé, appelée également par la suite Unités d'Accès (en anglais : « access units »).

Ces Unités d'Accès s'accompagnent d'informations telles que :
- des estampilles temporelles, afin d'assurer une synchronisation parfaite entre les différentes données restituées à un instant donné par un lecteur de données multimédia ;
- une marque complémentaire, qui peut être ajoutée à une Unité d'Accès, indiquant si la donnée peut être accédée de façon directe ou non (c'est-à-dire indépendamment des autres données appartenant au même flux). Cette marque s'appelle Point d'Accès Direct (en anglais « Random Access Point »), notée I (par exemple image Intra pour la vidéo) dans la suite du document. Cette information complémentaire permet à un lecteur de données multimédia ou à un serveur de streaming d'effectuer un accès à un endroit particulier dans le flux de données ;
- une indication permettant d'identifier sans ambiguïté la clé à utiliser pour permettre la suppression de la protection sur une donnée, en cas d'utilisation d'un mécanisme de rotation de clés, notée KI (Indicateur de Clé).

Lors d'une demande d'accès direct sur un contenu multimédia à un instant t, le lecteur de fichier local ou le serveur doit effectuer une recherche du point d'accès direct au temps t sur chacun des flux qui composent le contenu multimédia. Le lecteur de fichier local ou le serveur va utiliser les points d'accès directs définis sur les Unités d'Accès de chacun des flux pour accéder aux données à l'instant t.

Seules les Unités d'Accès marquées comme point d'accès direct, ou I, pourront être obtenues de manière directe. Le procédé de recherche permettant une restitution par le lecteur de données multimédia à l'instant t, consiste donc à retrouver sur chaque flux la première Unité d'Accès possédant une marque I avec une estampille temporelle inférieure ou égale au temps t demandé, puis à retourner au lecteur de données multimédia toutes les Unités d'Accès sur chacun des flux à partir de l'Unité d'Accès marquée I jusqu'à la dernière Unité d'Accès possédant une estampille temporelle inférieure ou égale au temps t.

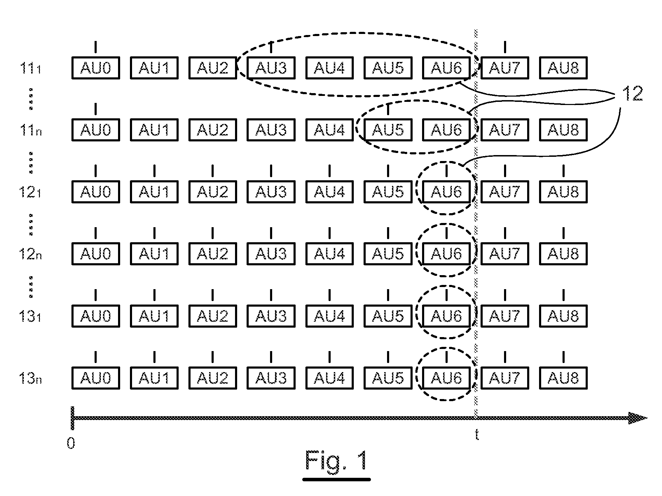

La figure 1 illustre ce principe sur un exemple. L'ensemble de flux comprend n flux vidéo 11₁ à 11ₙ, n flux audio 12₁ à 12ₙ et n flux de cryptage IPMP 13₁ à 13ₙ, tous constitués d'Unité d'Accès AU0, AU1,... Le nombre de flux de cryptage est variable, il peut par exemple n'y avoir qu'un seul flux de cryptage pour un ensemble de plusieurs flux de données audio et vidéo. Il peut également y avoir d'autres types de flux de données. Les Unités d'Accès portant l'étiquette « I » sont des points d'accès directs. Les autres Unités d'Accès ne sont pas autonomes, et nécessitent pour leur décodage de connaître l'Unité d'Accès direct précédente. Dans le cas où un utilisateur souhaite accéder à l'ensemble de flux de la figure 1 à l'instant t, il n'est donc pas suffisant de récupérer les Unités d'Accès AU6 justes précédentes. En effet, par exemple pour le flux 11₁, AU6 n'est pas autonome, non plus que AU4 et AU5. Il faut donc disposer de AU3, c'est-à-dire la dernière Unité d'Accès autonome, ou I, nécessaire à la restitution des informations contenues dans AU4 à AU6. En d'autres termes, on doit sélectionner, pour chaque flux, un ensemble 12 d'unités d'accès remontant jusqu'à l'Unité d'Accès I la plus récente, et comprenant toutes les Unités d'Accès suivantes (jusqu'à l'instant t, et ensuite après cet instant).

### 2.3 Le cryptage

On peut noter que les clés permettant la suppression de la protection sur les données sont elles-mêmes véhiculées sous forme d'Unités d'Accès, qui sont toutes des points d'accès directs. Ces Unités d'Accès sont transmises en parallèle des données. Il est par conséquent indispensable d'assurer une synchronisation parfaite entre les clés et les données protégées, de manière à permettre la suppression de la protection sur les données avant la restitution par le lecteur de données multimédia. Pour cela, l'outil de suppression de la protection extrait l'indicateur d'identification de clé (KI) véhiculée avec l'Unité d'Accès pour identifier sans ambiguïté la clé courante à utiliser sur les données protégées.

Pour le transfert de ces données, le standard MPEG spécifie un système de messagerie IPMP, contenant les clés de chiffrement (sous forme d'Unités d'Accès).

En particulier, ces messages permettent d'encapsuler des clés de chiffrement de manière à permettre le retrait de la protection sur les données véhiculées au niveau du lecteur de données multimédia.

Dans un service de consultation de contenus audiovisuels, un système de rotation de clés est souvent utilisé pour permettre une protection accrue des données. Cela signifie que les clés varient temporellement. L'intervalle de temps entre deux clés différentes se nomme la cryptopériode.

### 3. Inconvénients de l'art antérieur

Ce procédé de rotation de clés fonctionne généralement en envoyant la clé courante et la clé suivante à intervalles réguliers, parallèlement aux différents flux de données multimédia, dans chaque AU des flux 13₁ à 13ₙ. La clé courante permet alors de supprimer la protection des données estampillées à l'instant d'émission du message de demande d'accès. La clé suivante permet quant à elle de supprimer la protection des données futures pour anticiper le prochain changement de clé. Ceci permet d'éviter les problèmes d'asynchronisme pouvant subvenir sur certains systèmes où la clé ne serait pas encore arrivée pour déchiffrer une donnée.

Cependant, les inventeurs ont observé que, dans certains cas, et notamment pour des systèmes à faible débit (radiotéléphone par exemple), lors d'une demande d'accès direct, il se peut que le dernier point d'accès direct émis dans un flux remonte à plus d'une crypto-période, ce qui signifie que la clé courante dont dispose le lecteur de données ne correspond pas à celle dont il a besoin pour restituer l'image I requise. Par exemple, si la clé courante a changé, pour le flux 11₁, entre AU4 et AU5, on ne dispose pas de la bonne clé pour décoder AU3, qui est pourtant nécessaire.

La technique consistant à envoyer une clé courante et une clé suivante n'est alors plus du tout efficace. Cet aspect représente un inconvénient majeur de la technique actuelle.

Un autre inconvénient est que les clés permettant la suppression de la protection et leur mise en oeuvre ne sont pas spécifiées. Seuls sont spécifiés les mécanismes pour les transporter (sous forme de message IPMP).

En d'autres termes, les spécifications MPEG ne précisent pas à quel instant les clés doivent être envoyées vers le lecteur multimédia et également comment gérer un système de rotation de plusieurs clés sur un même flux de données.

### 4. Objectifs de l'invention

L'invention a notamment pour objectif de pallier ces inconvénients de la technique actuelle.

Plus précisément, un objectif de la présente invention est de fournir une technique permettant à un serveur ou un lecteur de fichiers de répondre efficacement à des demandes d'accès directs dans un contenu multimédia protégé par des clés changeant dans le temps, même lorsque des Unités d'Accès codées avec une clé ancienne, ou précédente, sont nécessaires.

Un objectif supplémentaire de l'invention est de proposer une telle technique, qui soit compatible avec toutes les spécifications existantes dans les différents standards du domaine du Multimédia, comme la norme MPEG.

Un autre objectif de l'invention est de fournir une telle technique, qui soit adaptée notamment aux réseaux à bas débit.

Ainsi, un objectif de l'invention est de fournir une telle technique, qui optimise le débit utile, et ne nécessite pas la transmission d'une quantité importante de données.

Encore un autre objectif de l'invention est de fournir une telle technique, qui ne nécessite pas de traitements complexes, ni à l'émission, ni à la réception des flux multimédia.

### 5. Exposé de l'invention

Ces différents objectifs, ainsi que d'autres qui apparaîtront par la suite, sont atteints à l'aide d'un procédé de transmission d'un ensemble de flux de données multimédia liés entre eux, chacun desdits flux étant formé d'unités élémentaires de données, ledit ensemble de flux comprenant :
- au moins un flux crypté, comprenant des unités élémentaires cryptées à l'aide de clés variant dans le temps, lesdites unités élémentaires comprenant :
   - des unités élémentaires autonomes, codées de façon autonome, formant chacune un point d'accès direct audit flux ;
   - des unités élémentaires intermédiaires, codées à partir d'une unité élémentaire autonome précédente ;
- au moins un flux de données de cryptage, formé d'unités élémentaires et délivrant lesdites clés.

Selon l'invention, au moins certaines des unités élémentaires dudit flux de données de cryptage portent un ensemble de clés comprenant au moins une clé courante et au moins une clé précédente, utilisée avant ladite clé courante.

Ainsi, selon l'invention, on ne fournit pas seulement la clé courante, mais également les clés précédentes qui sont nécessaires pour restituer les données à un instant choisi par l'utilisateur (dans certains cas cependant, juste après une unité autonome, la seule clé courante peut être suffisante). On ne fournit pas toutes les clés précédentes, ce qui génèrerait une perte de débit utile, mais uniquement la ou les clés justes précédant la clé courante.

On présente ci-après une façon optimisée de déterminer les clés à transmettre à chaque instant, mais d'autres approches peuvent être envisagées, comme la transmission systématique d'un nombre N de clés précédentes, lorsque l'on peut déterminer le nombre maximum de clés précédentes nécessaires pour la restitution correcte des différents flux.

L'invention s'applique aussi bien au cas où une seule clé est utilisée pour plusieurs flux qu'au cas où chaque flux (ou chaque type de flux) dispose de sa propre clé de cryptage. Dans ce dernier cas, l'ensemble de clés comprend plusieurs clés courantes, une pour chaque flux ou type de flux.

De façon avantageuse, ledit ensemble de clés porte toutes les clés précédentes jusqu'à celle utilisée pour le cryptage de l'unité de données autonome la plus récente, pour chacun desdits flux.

En d'autres termes, l'ensemble de clés permet de remonter suffisamment dans le temps pour reconstruire tous les flux, et donc de disposer pour chacun d'eux de la dernière unité de données autonome. On comprend que dans ce cas, le nombre de clés précédentes varie, et peut être nul.

Préférentiellement, ledit ensemble de clés porte au moins une clé future, à utiliser après ladite clé courante, utile pour le mode de visualisation en continu.

Selon un mode de réalisation avantageux de l'invention, le procédé de transmission comprend les étapes de :
- réception d'une demande d'accès direct à une position choisie par un utilisateur dans ledit ensemble de flux de données multimédia, émise par un terminal ;
- transmission partielle desdits flux, de façon à permettre audit terminal de restituer lesdits flux à partir de ladite position choisie.

Ainsi, en fonction d'une requête d'un utilisateur, on transmet toutes les données nécessaires, et uniquement (ou pratiquement) les données nécessaires.

On peut noter que la transmission peut être effectuée depuis des moyens d'émission et/ou un serveur, par tout moyen (hertzien, filaire, réseau local ou de type Internet...), voire en local, par exemple depuis un support tel qu'un DVD-ROM ou un disque dur.

L'invention concerne également les produits programme d'ordinateur téléchargeable depuis un réseau de communication et/ou stocké sur un support lisible par ordinateur et/ou exécutable par un microprocesseur, comprenant des instructions de code de programme pour la mise en oeuvre de ce procédé.

L'invention concerne par ailleurs un procédé d'encodage d'un ensemble de flux de données multimédia liés entre eux, tel que décrit ci-dessus. Un tel procédé d'encodage comprend une étape de cryptage des unités élémentaires d'au moins un desdits flux et une étape de construction des unités élémentaires dudit flux de données de cryptage. Selon l'invention, ladite étape de construction associe, au moins à certaines des unités élémentaires dudit flux de données de cryptage, un ensemble de clés comprenant au moins une clé courante et au moins une clé précédente, utilisée avant ladite clé courante.

Avantageusement, ladite étape de construction met en oeuvre une étape de mise à jour d'une liste de clés pour ledit ensemble de clés, chaque fois que ladite étape de cryptage crypte une unité élémentaire autonome et/ou qu'une nouvelle clé courante est mise en oeuvre.

L'invention concerne aussi le produit programme d'ordinateur pour la mise en oeuvre de ce procédé d'encodage.

L'invention concerne par ailleurs un signal multimédia transmis ou produit par les procédés décrits ci-dessus. Au moins certaines des unités élémentaires dudit flux de données de cryptage de ce signal portent un ensemble de clés comprenant au moins une clé courante et au moins une clé précédente, utilisée avant ladite clé courante.

Préférentiellement, chacune desdites unités élémentaires dudit flux de données de cryptage comprend :
- un indice représentatif de la clé courante et/ou de la période de cryptage courante ;
- le nombre de clés présentes dans ledit ensemble de clés ;
- ledit ensemble de clés.

L'invention concerne également les supports de données portant au moins un tel signal multimédia.

Par ailleurs, l'invention concerne un procédé de réception d'un ensemble de flux de données multimédia liés entre eux, tel que décrit ci-dessus. Un tel procédé comprend les étapes de :
- demande d'accès direct à une position choisie par un utilisateur dans ledit ensemble de flux de données multimédia ;
- réception d'unités élémentaires dudit flux de données de cryptage, au moins certaines d'entre elles portant un ensemble de clés comprenant au moins une clé courante et au moins une clé précédente, utilisée avant ladite clé courante ;
- décryptage, pour au moins un desdits flux cryptés, d'au moins une unité élémentaire précédant l'unité élémentaire courante, à l'aide d'une desdites clés précédentes.

De façon préférentielle, ladite étape de décryptage assure, pour au moins un desdits flux cryptés, le décryptage de l'unité élémentaire autonome précédente la plus proche de ladite position choisie, et de toutes les unités élémentaires suivantes jusqu'à ladite position choisie et au-delà.

L'invention concerne encore les produits programme d'ordinateur pour la mise en oeuvre de ce procédé de réception.

L'invention concerne également un dispositif de restitution d'un ensemble de tels flux de données multimédia liés entre eux, et comprenant :
- des moyens de demande d'accès direct à une position choisie par un utilisateur dans ledit ensemble de flux ;
- des moyens de réception et/ou de lecture d'unités élémentaires dudit flux de données de cryptage, au moins certaines d'entre elles portant un ensemble de clés comprenant au moins une clé courante et au moins une clé précédente, utilisée avant ladite clé courante, et
- des moyens de décryptage, pour au moins un desdits flux cryptés, d'au moins une unité élémentaire précédant l'unité élémentaire courante, à l'aide d'une desdites clés précédentes.

### 6. Liste des figures

D'autres caractéristiques et avantages de l'invention apparaîtront à la lecture de la description suivante d'un mode de réalisation préférentiel de l'invention, donné à titre d'exemple indicatif et non limitatif, et des dessins annexés, parmi lesquels :
- la figure 1 présente le mécanisme d'envoi des données lors d'un accès direct sur un ensemble de flux multimédia, décrit en préambule ;
- la figure 2 illustre le contenu des messages contenant les clés de chiffrement, selon un premier mode de réalisation de l'invention dans lequel les clés sont communes à tous les flux ;
- la figure 3 illustre la structure des messages contenant les clés de chiffrement, selon un second mode de réalisation de l'invention utilisant des clés distinctes pour la vidéo et pour l'audio ;
- les figures 4a et 4b sont des organigrammes illustrant deux modes de construction des messages de cryptage (ensembles de clés) selon l'invention ;
- la figure 5 est un organigramme présentant les étapes de restitution des données transmises selon un mode de réalisation de l'invention, lors d'une demande d'accès direct ;
- la figure 6 présente schématiquement une architecture fonctionnelle d'un dispositif de restitution de données multimédia selon l'invention ;
- Les figures 7a, 7b, 7c, 7d représentent différents types d'embrouillage de médias possibles dans des modes de réalisation proposés par l'invention, détaillés en annexe ;
- la figure 8 schématise la synchronisation d'un ensemble des flux d'un fichier multimédia selon l'invention ;
- La figure 9 illustre les transferts des messages vus d'un dispositif selon l'invention, lors de la restitution des données ;
- la figure 10 schématise la structure générale d'une unité élémentaire d'un flux de cryptage selon l'invention ;
- la figure 11 présente schématiquement une structure d'un dispositif de restitution de données multimédia selon l'invention.

### 7. Description d'un mode de réalisation de l'invention

### 7.1 Principe général

L'invention propose donc une approche optimisée et efficace de la gestion des clés, dans un système mettant en oeuvre un ou plusieurs flux multimédias cryptés à l'aide de clés variant dans le temps.

En considérant un ensemble de flux de données protégées par une ou plusieurs clés qui évoluent dans le temps, l'invention permet ainsi de s'assurer qu'un lecteur de données multimédia ("player" en anglais) disposera de la clé ou de toutes les clés nécessaires pour permettre de supprimer la protection lors d'accès directs effectués sur les données multimédia. Pour cela, l'invention propose de fournir à tout instant la liste des clés nécessaires pour chaque flux entre le précédent point d'accès direct des données protégées et une nouvelle crypto-période (durée de validité d'une clé). Ce procédé s'avère nécessaire dans le cas où deux changements de clés interviennent entre deux Unités d'Accès (ou unités élémentaires, ou AUs) consécutives de type I.

Pour cela, l'invention propose de structurer les messages qui permettent de véhiculer les clés s'exerçant sur des données protégées. Ils doivent être construits de manière à contenir (quel que soit l'ordre des clés) :
- les clés passées qui ont déjà été émises durant l'intervalle entre le précédent point d'accès direct des données protégées et l'instant d'émission du message ;
- la clé courante permettant de supprimer la protection des données estampillées à l'instant d'émission du message ;
- éventuellement, la clé future permettant de supprimer la protection des données pour anticiper le prochain changement de clé.

L'invention propose donc notamment un procédé pour la construction de tels messages pour permettre un décryptage efficace lors d'une demande d'accès direct, tout en assurant une compatibilité avec les spécifications et caractéristiques des standards multimédia.

### 7.2 Application à MPEG-4

Dans la suite de la description, on considère, à titre d'exemple, un mode de réalisation particulier dans lequel le contenu protégé est un contenu multimédia MPEG-4 (ISO/IEC 14496-1).

Les principales caractéristiques de ce standard concernées par la présente invention sont :
- la donnée, ou unité, élémentaire multimédia est une Unité d'Accès notée AU;
- à chaque AU sont associées des informations temporelles DTS (« Decoding TimeStamp ») et CTS (« Composition TimeStamp ») ;
- une marque I peut être ajoutée, pour indiquer que l'AU est un point d'accès direct ;
- une AU est accompagnée d'un Indicateur de Clé KI, qui permet d'identifier sans ambiguïté la clé à utiliser pour permettre la suppression de la protection sur la donnée.

Le procédé est indépendant du type de flux. Les clés permettant de supprimer la protection sur les données sont véhiculées dans le flux IPMP via des messages IPMP-X de type IPMP_KeyData (tels que défini dans ISO/IEC 14496-1FDAM3, ISO/IEC FDIS 14496-13:2003). Ces messages IPMP-X encapsulent des entités appelées Messages de Contrôle d'Accès (ECM), qui contiennent toutes les informations sur les clés de désembrouillage servant à ôter la protection sur les données demandées.

On appelle crypto-période, la fenêtre temporelle de durée T de validité d'une clé de déchiffrement pour des données. Cette fenêtre temporelle peut être variable.

L'invention propose donc, au moment de la production d'un contenu multimédia sécurisé avec un système de rotation de clés, d'ajouter des messages IPMP-X de type IPMP_KeyData pour faire varier les clés de déchiffrement et permettre des accès directs futurs dans le contenu multimédia au niveau du lecteur de contenus multimédia.

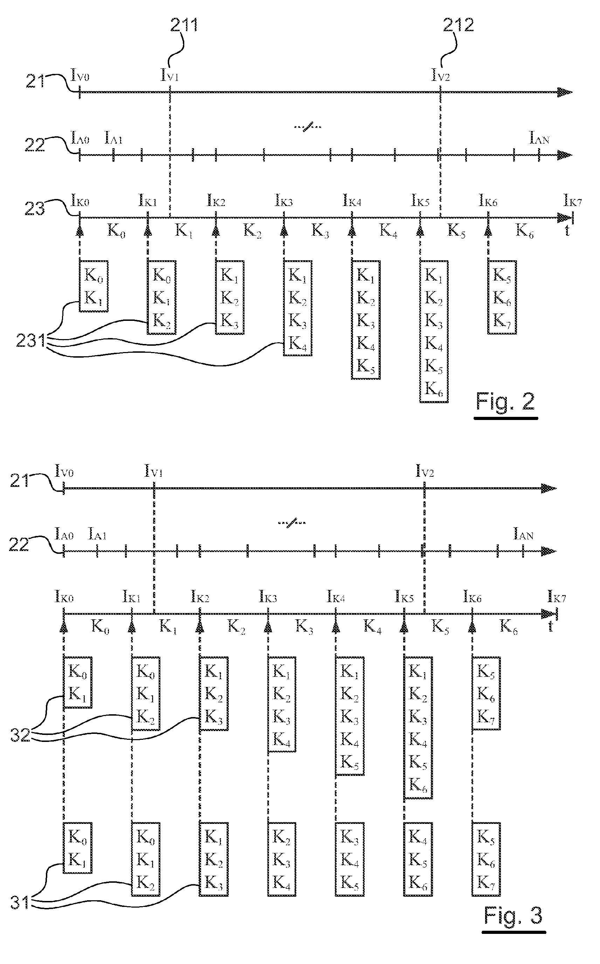

La figure 2 fournit un exemple d'un ensemble de flux comprenant un flux vidéo 21, un flux audio 22 et un flux de clés 23. Les messages IPMP-X 231 de ce flux de clés contiennent plusieurs clés de chiffrement. On peut noter l'évolution et la construction de ces messages 231 sur l'axe du flux de clés : entre deux images de type I 211 et 212 du flux vidéo, à chaque fois qu'une clé nouvelle Kᵢ arrive, elle est ajoutée à la liste de clés existante et un message de type IPMP-X 231 est envoyé avec la liste de clés actualisée.

Dans ce mode de réalisation particulier, le type de cryptage est un embrouillage de type « Contenu », c'est-à-dire que le flux IPMP contient par cryptopériode un unique message de contrôle d'accès (ECM), contenant la liste des clés d'embrouillage chiffrées utilisées pour plusieurs flux de données présents (audio, vidéo, etc.).

L'invention s'applique aussi au cas du cryptage de type « embrouillage composante ». Ces aspects sont détaillés en annexe. Dans ce cas, le flux IPMP contient, par cryptopériode, autant d'ECMs que de médias présents dans le contenu, contenant chacun la liste de clés d'embrouillage chiffrées pour chacun de ces médias. La figure 3 illustre la structure du flux IPMP dans une telle configuration. Il existe alors un flux de clés IPMP 31 distinct pour le flux audio, un flux de clés IPMP 32 distinct pour le flux vidéo, etc.

### 7.3 Génération des messages

On décrit ci-après un mode de réalisation particulier de génération des messages IPMP-X. On se place donc dans la partie encodage et encryptage du signal multimédia.

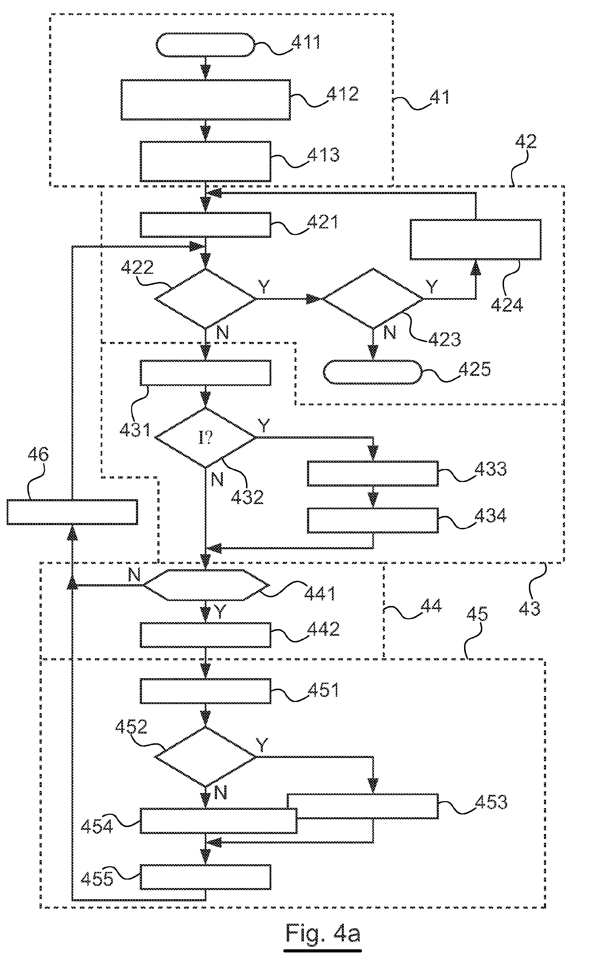

Ce procédé de génération de messages est illustré schématiquement par la figure 4a, qui présente la structure algorithmique de la génération de messages IPMP selon l'invention. Pour plus de clarté, on a noté en italique les éléments correspondant à l'allocation de valeurs aux variables utilisées.

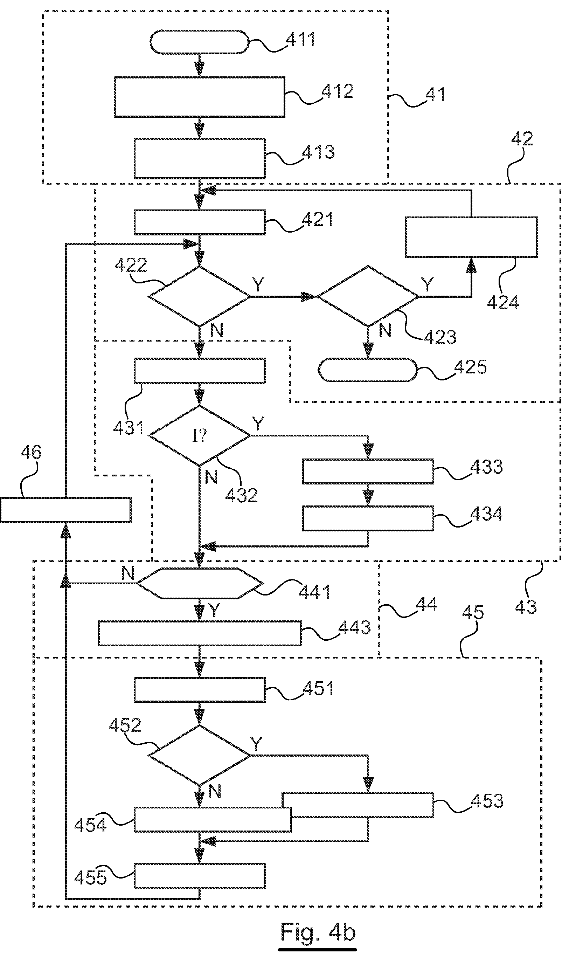

L'algorithme est constitué de six grandes étapes (41, 42, 43, 44, 45, 46) :
**Etape 41 :** Dans une première étape 41, le début 411 de l'algorithme amorce l'initialisation 412 de différents paramètres nécessaires à la génération de messages IPMP :
   - un indice désignant le flux en cours de traitement (« **RefStream** ») est initialisé à zéro : on parcourt le premier flux : *RefStream* =*0* ;
   - un pointeur « **IndKeyContent** » pointe sur un tableau « **KeyListContent** » contenant les clés utilisées lors du parcours du flux en cours de traitement. Cette liste se remplit lors du parcours du premier flux, et est ensuite réutilisée lors du parcours des flux suivants. A la fin du parcours du premier flux, elle contient donc la totalité des clés de cryptage utilisées pour la lecture du fichier MPEG4. Elle est indépendante du type de flux et de la fréquence des Points d'Accès Direct. Dans l'étape 412, la liste est vide, l'indice pointe alors sur la première case du tableau : *IndKeyContent* = *0 ;*
   - un pointeur « **IndKeyStream** » qui sert à pointer sur une matrice « **KeyListStream** » contenant les clés nécessaires entre chaque Unité d'Accès de type I, et pour chaque flux. Cette liste sera émise dans les messages IPMP générés dans le flux de clés IPMP. Elle permettra de répondre aux demandes d'accès direct ; Au stade de l'étape 412, la matrice est vide, le pointeur pointe sur la première case du tableau : *IndKeyStream[RefStream]*=*0* ;
   On crée ensuite, dans l'étape 413, les deux « premières » clés, courante et suivante, à utiliser pour encrypter le fichier, K_{C} et K_{N}, avec lesquelles il remplit la liste de clés « **KeyListContent** » : *Créer K_{C} et K_{N}*;:
   *KeyListContent[0]*=*K_{C}*
   *KeyListContent[1]*=*K_{N}*
**Etape 42 :** elle permet d'entamer le traitement de génération de messages. L'algorithme identifie le flux en cours de traitement :
   - Pour cela, l'algorithme incrémente tout d'abord le pointeur du tableau de liste de clé « **KeyListContent** » (421) : *IndKeyContent* = *2 ;*
   - Une étape 422 teste si le flux est terminé ou non. Si oui, l'algorithme teste si un autre flux doit être décodé (423) : si non, le traitement est terminé (425). Si oui, une étape 424 remet la clé courante K_{C} et la clé suivante K_{N} à jour pour le nouveau flux, à partir des clés précédemment identifiées (lors du flux précédent), et stockées dans la liste de clés « **KeyListContent** »: *K_{C}* = *KeyListContent[0] et Kₙ* = *KeyListContent[1].* En même temps, l'indice indiquant le flux en cours de traitement est incrémenté : *RefStream* = *RefStream*+*1.* L'étape 42 est alors répétée pour les flux suivants.
**Etape 43 :** Si le flux testé à l'étape 422 n'est pas terminé, on lit les Aus une par une dans le flux en cours de traitement (431) : *Lire AU suivante (RefStream),* eton détermine leur type : Autonome ou dépendante : *I ?*
   Si la donnée élémentaire est autonome, une étape 433 remet à zéro **« KeyListStream » :** *RAZ KeyListStream(RefStream)* pour le flux en cours et ramène alors l'indice pointant sur l'ensemble des clés à la première case : *IndKeyStream[RefStream]*=*0.*
   On génère (434) le nouvel ensemble de clé que la matrice doit stocker avec les nouvelles clé courante K_{C} et clé suivante K_{N} :
   *KeyListStream[RefStream][0]*=*K_{C}*
   *KeyListStream[RefStream][1]*=*K_{N}*
   L'indice **pointant** sur la matrice « **KeyListStream** » est lui aussi *incrémenté : IndKeyStream[RefStream]*=*2.*
**Etape 44 :** génération des messages IPMP. Pour cela, une étape 441 teste si l'instant d'un changement de clé est atteint dans le flux de clés : *Changement de clés ?*
   Si non, l'AU en cours est immédiatement embrouillée avec la clé courante K_{C} : Embrouiller AU avec KC. puis le processus réitère les opérations précédentes à partir de l'étape 422.
   Si la clé est nouvelle, alors l'algorithme crée (442) d'abord un nouveau message IPMP-X de type I contenant, selon l'invention, les clés diffusées entre la nouvelle clé et la dernière image de type I émise du flux courant, dans un unique ECM : *Créer message IPMP-X de type I contenant la liste de clés KeyListStream du flux courant dans un seul ECM;*
**Etape 45 :** Lorsqu'une nouvelle clé est identifiée, tout un processus de remise à jour des différentes listes et tableaux est effectué : étape 45. Tout d'abord, la clé suivante devient la clé courante (451) : *K_{C}* = *K_{N}*
   Ensuite, la liste de clés « **KeyListStream** » est réactualisée avec la nouvelle clé courante et la nouvelle clé suivante. Il y a deux possibilités, identifiées par l'état de la liste de clé « **KeyListContent** », sur laquelle un test 452 est réalisé *KeyListContent[IndKeyContent]*=*0* ?:
   - Soit le flux parcouru est le premier traité. Dans ce cas, la liste « **KeyListContent** » ne contient pas encore les clés suivantes du flux crée alors (453) la nouvelle clé suivante et l'intègrant dans la matrice de clés :
      « KeyListStream »[RefStream][IndKeyStream[RefStream]] et dans la liste de clés « **KeyListContent » :**
         *Créer K_{N}*
         *KeyListStream[RefStream][IndKeyStream [RefStream]]* = *K_{N}*
         *KeyListContent[IndKeyContent]*=*K_{N}*
   - Soit le flux parcouru n'est pas 1 premier traité. Dans ce cas, la liste « **KeyListContent** » est déjà remplie de l'ensemble des clés du fichier traité. On remet alors (454) à jour la matrice de clés « **KeyListStream** » en venant chercher les clés nécessaires dans la liste « **KeyListContent** » :
      *KeyListStream[RefStream][IndKeyStream [RefStream]]* = *KeyListContent[IndKeyContent].*
   - La dernière étape 455 de l'algorithme incrémente ensuite les deux indices « **IndKeyContent** » et « **IndKeyStream** » d'une case, puisqu'un changement de clé a eu lieu (à l'étape 441) :
      *IndKeyContent* = *IndKeyContent*+*1*
      *IndKeyStream[RefStream]=IndKeyStream[RefStream]*+*1*
      Pour terminer, la clé courante K_{C} sert à l'étape d'embrouillage des données élémentaires (46). L'algorithme reprend ensuite toutes ces étapes à partir de l'étape 422 pour le traitement des AUs suivantes.
      Cette arborescence présente alors la double possibilité de lire les flux soit successivement et indépendamment, soit à la volée, en identifiant le type de flux (audio, vidéo, ...), via le paramètre « **RefStream** ». Elle s'applique également aux données diffusées en temps réel.
      D'autre part, l'invention présente l'avantage de couvrir aussi le système de restitution des données encryptées telles que décrit précédemment. Un tel système de restitution peut être un lecteur de fichier local, ou bien un serveur par exemple, et il est en mesure de répondre à des demandes d'accès direct.
      Une variante de génération des messages IPMP selon un second mode de réalisation est illustrée par l'organigramme de la figure 4b.
      En comparaison avec l'organigramme de la figure 4a, ce mode de réalisation diffère par l'étape de construction des messages IPMP-X (étape 442 de la figure 4a). En effet, il est prévu un mode supplémentaire de distribution des clés CW nécessaires entre deux AUs autonomes (images I).
      Dans ce mode de distribution, les clés sont placées dans une liste de plusieurs messages de contrôle d'accès (ECM). Cette opération s'effectue à l'étape 443 de l'organigramme de la figure 4b et remplace alors l'étape 442 de l'organigramme de la figure 4a : *Créer message IPMP-X de type I contenant la liste des ECMs répartissant les CW de KeyListStream du flux courant.*

### 7.4 Format des messages IPMP

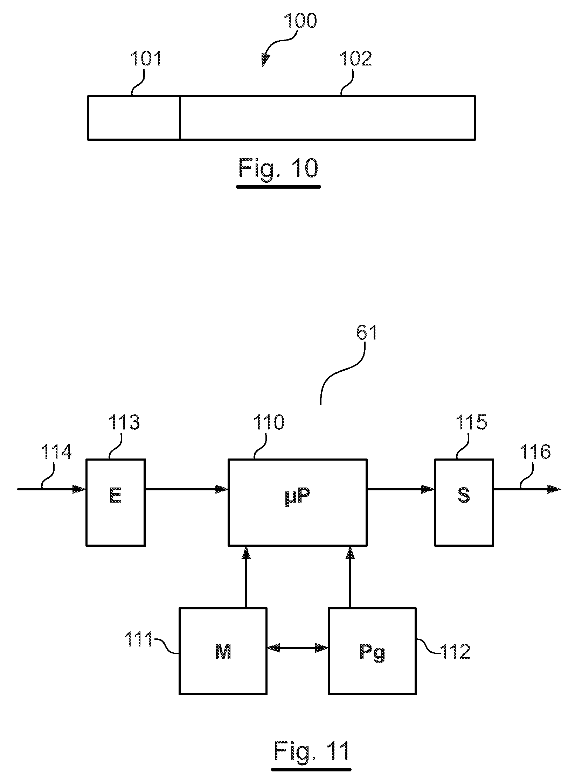

La figure 10 illustre schématiquement la structure d'une AU 100 du flux de cryptage, constituée d'une partie d'entête 101 comprenant les informations caractéristiques des données transportées et d'une partie de données 102.

Les ECMs transportés dans le flux IPMP ont le format suivant : 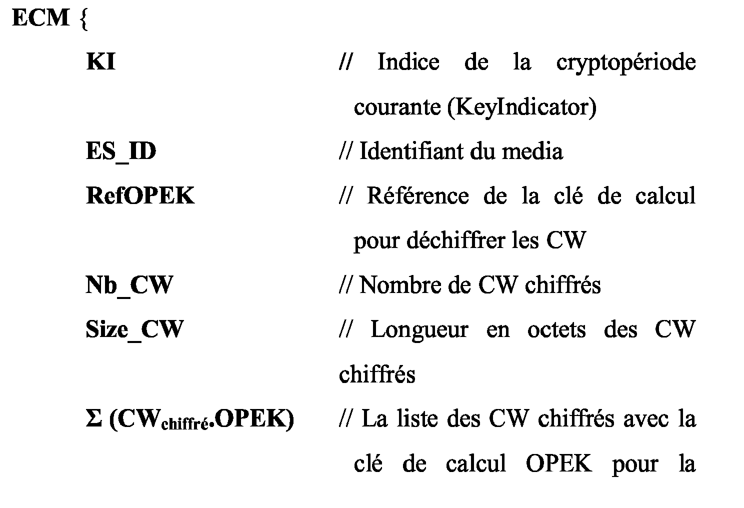 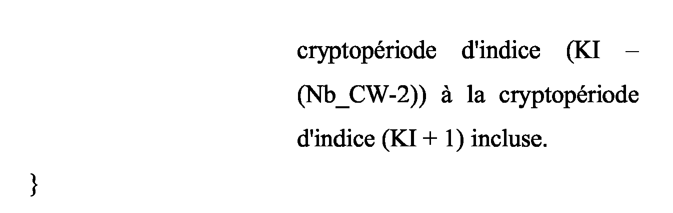 où:
**KI** : identifie la cryptopériode et permet la synchronisation entre les AUs traités en désembrouillage et le contenu de l'ECM.

### Exemple :

o Si les CW sont distribués dans un même ECM (liste de CW) :

| | | | | | **Précédents** | | | |
|---|---|---|---|---|---|---|---|---|
| **KI** | **ES_ID** | **RefOPEK** | **Nb_CW** | **Size_CW** | **CW_{C-2}** | **CW_{C-1}** | **CW_{C}** | **CW_{N}** |
| 7 | ES ID | RefOPEK | 4 | 16 | CW_{KI-2} | CW_{KI-1} | CW_{KI} | CW_{KI+1} |

o S'ils sont répartis dans plusieurs ECMs en respectant la distribution "courant-suivant" dans l'ECM :

| **KI** | **ES_ID** | **RefOPEK** | **Nb_CW** | **Size_CW** | **CW_{C}** | **CW_{N}** |
|---|---|---|---|---|---|---|
| 7 | ES_ID | RefOPEK | 2 | 16 | CW_{KI} | CW_{KI+1} |

.../... selon le nombre de clés d'embrouillage (CW) à distribuer

| **KI** | **ES_ID** | **RefOPEK** | **Nb_CW** | **Size_CW** | **CW_{C}** | **CW_{N}** |
|---|---|---|---|---|---|---|
| 8 | ES_ID | RefOPEK | 2 | 16 | CW_{KI} | CW_{KI+1} |

### 7.5 Restitution d'un ensemble de flux

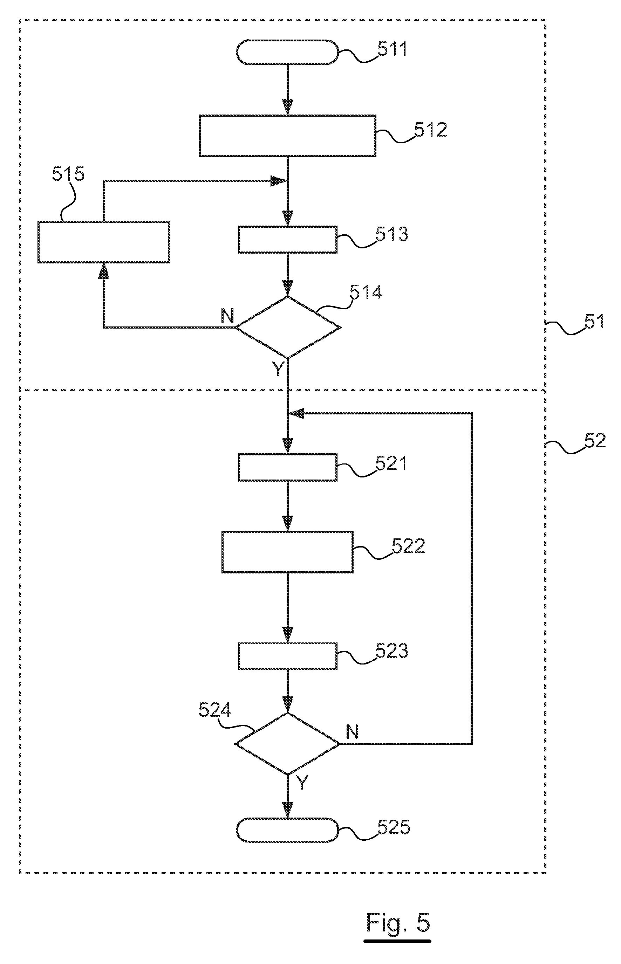

La figure 5 illustre sous forme d'organigramme les étapes effectuées par le dispositif de restitution pour répondre à une demande d'accès direct, à un instant t. Le processus comprend deux phases 51 et 52 que nous détaillons maintenant :
**Etape 51** Cette étape réalise une recherche, par ordre décroissant, dans chacun des flux du contenu multimédia, de la première AU de type I avec un instant d'émission (DTS) inférieur ou égal à t.
   Pour cela, l'étape 511 de début amorce le processus en déclenchant l'étape suivante 512 de placement du dispositif sur l'AU directement précédente à celle de l'instant t : *Se placer sur la première AU avec DS inférieur à t.*
   Une lecture 513 de l'AU est réalisée par le dispositif : *Lire AU.*
   Un test 514 est ensuite réalisé sur cette AU pour connaître son type : autonome (I) ou dépendante : *I ?*
   Si elle est dépendante, on se place (515) sur l'AU précédente : *Se positionner sur l'AU précédente.*
   Les étapes 513, 514 et 515 sont alors réitérées jusqu'à ce qu'une AU de type I soit identifiée (à l'étape 514).
**Etape 52:** Dans ce cas, on passe à l'étape 52, et l'AU identifiée comme autonome est envoyée (521) : *Envoyer AU.*
   Il s'en suit la restitution de la donnée demandée, en envoyant les Unités d'Accès sur chacun des flux à partir de l'AU de type I jusqu'à la dernière AU ayant un instant d'émission (DTS) inférieur ou égal à t.
   Pour cela, le processus se positionne (522) sur l'AU suivante : *Se positionner sur l'AU suivante,* et la lit (523) : *Lire AU.*
   Il réalise ensuite un test (524) sur son instant d'émission : *DTS*>*t ?*
   Si la réponse est non, le processus reboucle à l'étape 521, et répète l'ensemble des étape 521, 522, 523, 524.
   Lorsque le test 524 est positif Y (« Yes »), le processus se termine (525).
   La figure 11 illustre la structure d'un dispositif de restitution de données multimédia 61.
   Le dispositif comprend une mémoire M 111, et une unité de traitement 110 équipé d'un microprocesseur µP, qui est piloté par un programme d'ordinateur (ou application) Pg 112. L'unité de traitement 110 reçoit en son entrée, via un module d'interface d'entrée E 113, des commandes serveur 114, que le microprocesseur µP traite, selon les instructions du programme Pg 112, pour générer des requêtes et/ou des réponses 116, qui sont transmises via un module d'interface de sortie 115.

### ANNEXE

Cette annexe décrit les échanges de messages entre un dispositif de restitution (ou « player », selon la terminologie anglaise) et les divers outils (« tools » en anglais) qui sont demandés et déclarés dans l'IOD (« Initial Object Descriptor » ou descripteur d'objet initial) et les ODs (« Object Descriptor » ou descripteur d'objet) du fichier MPEG4. Le but de cette annexe n'est pas de décrire l'ensemble des messages échangés, mais uniquement ceux essentiels à la compréhension du fonctionnement du système et nécessaires pour la protection des contenus.

La messagerie IPMPX sur laquelle s'appuie cette annexe est décrite dans le document ISO/IEC 14496-1FDAM3 ― ISO/IEC FDIS 14496-13:2003.

### 1. Architecture fonctionnelle du dispositif

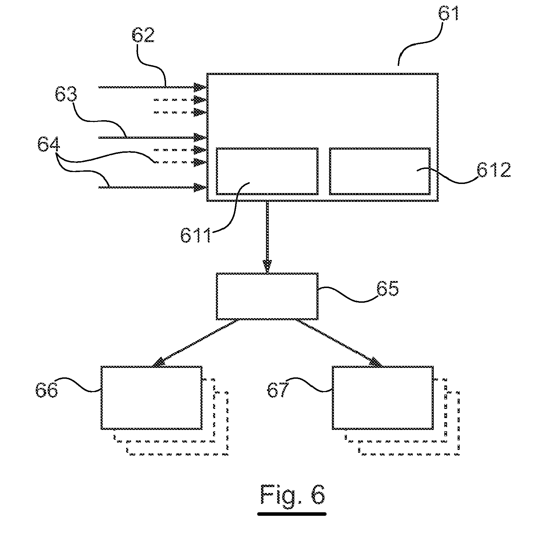

Dans le mode de réalisation décrit, illustré schématiquement par la figure 6, le dispositif de restitution de flux 61 reçoit des flux audio 62, des flux vidéo 63 et un flux de clés IPMP 64. On utilise :
■ un outil « **ACS Tool** » 65, lié au flux IPMP diffusé. Il reçoit les messages de contrôle d'accès ECM, déchiffre le ou les mots de contrôle chiffrés contenus dans l'ECM pour retrouver la clé de désembrouillage à appliquer pour une crypto-période donnée et un flux donné (CW) ;
■ des outils « **Descrambler Tools** » 66 et 67 pour chaque flux media 62, 63 contenu dans le fichier.

Un fichier MPEG4 contient un IOD et des ODs dont le rôle est de décrire l'ensemble des medias composant le contenu diffusé. La protection de ces flux est décrite à l'aide de descripteurs positionnés dans l'arborescence de l'IOD et des ODs selon la portée que l'on souhaite attribuer à la configuration souhaitée.

Trois descripteurs sont essentiels :

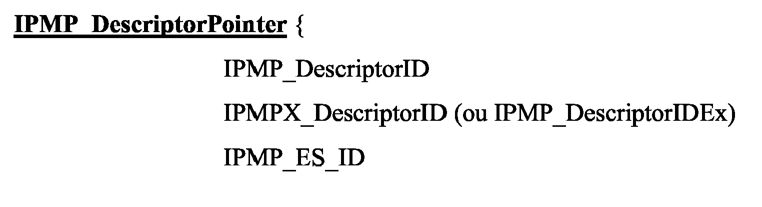

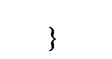

Il associe un flux IPMP diffusé (IPMP_ES_ID ≠ 0) avec un Outil IPMP identifié par « IPMP_DescriptorIDEx ». Si IPMP_ES_ID = 0, l'Outil n'est pas lié à un flux IPMP diffusé. Lors de la lecture de l'IOD par le dispositif, ce descripteur permet d'instancier un Outil IPMP avec un flux media.

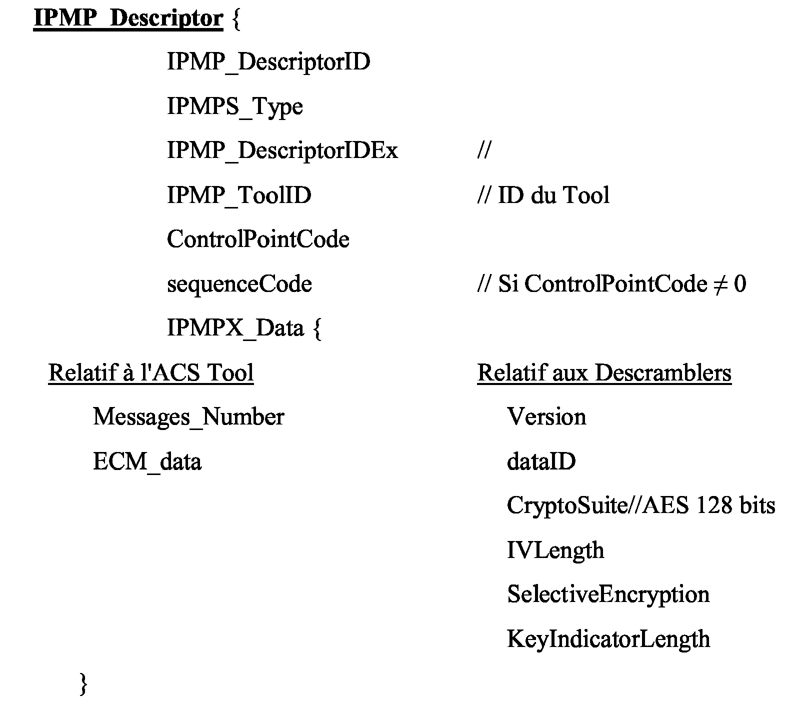

Ce descripteur permet de configurer ou de transmettre des données vers des Outils désignés par leur identifiant (« IPMP_DescriptorIDEx »).

L' « IPMP_Descriptor » lié à l'Outil ACS permet d'envoyer le ou les premiers ECM de chaque flux dans le champ « IPMPX_Data ».

L'« IPMP_Descriptor » lié à l'Outil « Descrambler » permet d'envoyer des données de configuration précisant les longueurs de certaines données et des modes de fonctionnement (« SelectiveEncryption », par exemple).

### IPMP ToolListDescriptor {...}

Ce descripteur permet de donner la liste des Outils nécessaires pour traiter les divers flux d'un contenu multimedia. Il est traité en réception par un Outil « Manager » 612 dont le rôle est de demander le téléchargement d'un Outil si le dispositif ne le possède pas et de configurer et gérer les Outils présents en lien direct avec des moyens de routage des messages (« Message Router ») 611.

Le « Message Router » 611 est l'organe de dialogue entre le dispositif et les divers Outils présents. C'est lui qui construit les messages « IPMP_Message » nécessaires pour les émettre vers les Outils.

Tout dialogue entre Outils passe obligatoirement par le « Message Router » 611.

### 2. Embrouillage niveau « contenu » ou « composante »

Deux modes d'embrouillage peuvent être pris en compte :
■ Embrouillage « contenu » : un seul flux de cryptage avec liste de clés (CW) pour l'ensemble des flux média présents ;
■ Embrouillage « composante » : un flux de cryptage avec liste de clés (CW) différente par flux média.

### 2.1 Embrouillage contenu

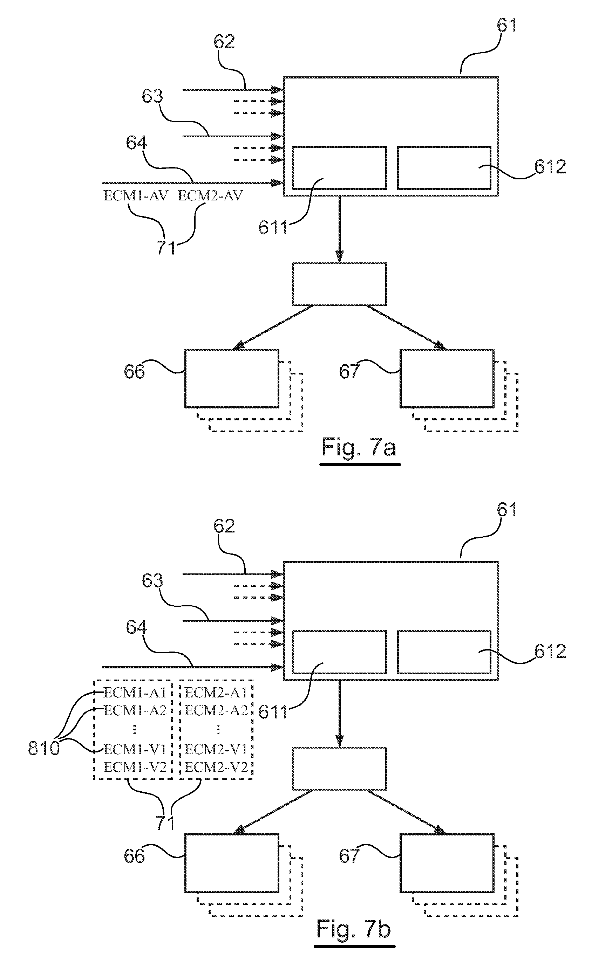

En référence à la figure 7a, Le flux IPMP 64 contient un seul ECM 71 par cryptopériode (ECM1-AV, ECM2-AV ...), contenant la liste de clés d'embrouillage chiffrées utilisées pour tous les flux présents 62, 63.

Du côté du dispositif de restitution, il y aura autant d'outils de désembrouillage (« Tool Descrambler ») 66, 67 qu'il y a de flux présents 62, 63 dans le contenu.

Ces instanciations se font en interne à l'aide de messages spécifiques décrits dans la norme MPEG-4 IPMP-X. Les désembrouilleurs sont instanciés pour traiter les AUs d'un media identifié par IPMP_ES_ID.

### 2.2 Embrouillage composante

En référence à la figure 7b, le flux IPMP 64 contient autant d'ECMs 71, par cryptopériode que de media 62, 63 présents dans le contenu, contenant chacun la liste de clés d'embrouillage 810 chiffrées pour chacun de ces media 62, 63.

Du côté du dispositif de restitution, il y aura autant d'Outils « Descrambler Tool » 66, 67 qu'il y a de flux présents 62, 63 dans le contenu.

Ces instanciations se font en interne à l'aide de messages spécifiques décrits dans la norme MPEG-4 IPMP-X. Les désembrouilleurs sont instanciés pour traiter les AUs d'un media identifié par IPMP_ES_ID.

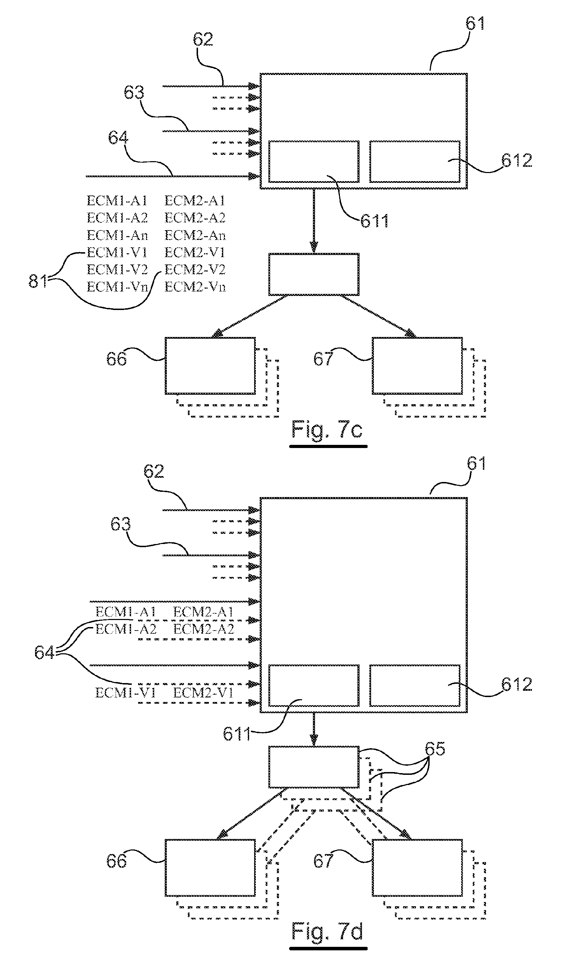

### 2.3 Embrouillage contenu ou composante avec MPEG-4 IPMP-X (Figure 7c)

Le flux IPMP 64 contient, par cryptopériode, un ensemble d'ECMs 81 contenant les clés d'embrouillage chiffrées pour les cryptopériodes courante et suivante pour distribuer les clés nécessaires entre deux AU de "type I".

La différence entre l'embrouillage contenu et l'embrouillage composante n'est plus réellement significative car le nombre d'ECMs est le même dans les deux cas.

Du côté du dispositif de restitution, il y aura autant d'Outils Descrambler Tool 66, 67 qu'il y a de flux présents 62, 63 dans le contenu.

Ces instanciations se font en interne à l'aide de messages spécifiques décrits dans la norme MPEG-4 IPMP-X. Les désembrouilleurs sont instanciés pour traiter les AUs d'un media identifié par IPMP_ES_ID.

### 2.4 Autre solution (figure 7d)

Une autre solution envisageable est de construire autant de flux IPMP 64 qu'il y a de media 62, 63 présents dans le contenu. Dans ce cas, chaque flux IPMP contient un seul ECM par cryptopériode. Cette solution complexifie cependant la gestion du côté du dispositif de restitution :
■ Elle oblige à lier chaque flux IPMP 64 avec n instances d'outils ACS 65 ;
■ Elle multiplie les Outils dans le dispositif, donc les messages émis via le « Message Router » 611;

### 3. Protection MPEG-4 IPMP-X

### 3.1 Embrouillage

Dans une implémentation mise en oeuvre, on utilise :
■ l'embrouillage AES-CTR-128 ;
■ l'encapsulation ISMACryp,
décrits dans la norme ISMA 1.0 Encryption and Authentication, contribution TD0045, Janvier 2004.

Les paramètres « MPEG-4 IPMP-X» sont contenus dans un entête placé devant l'entête de chacune des AUs.

Le paramètre « KeyIndicator » (KI) permet la synchronisation entre les ECMs et les AUs à désembrouiller. Il est placé dans chaque ECM et dans l'entête de chaque AU.

### 3.2 Génération CW - Calcul ECM

Un logiciel d'émission génère les clés d'embrouillage (CW) : CW = 16 octets

Chaque ECM contient au moins deux clés de désembrouillage (crypto période courante et suivante). La durée de la crypto période est programmable. La valeur par défaut est de 10 secondes.

Le logiciel d'émission assure la périodicité des demandes de calcul d'ECMs et de génération des CWs.

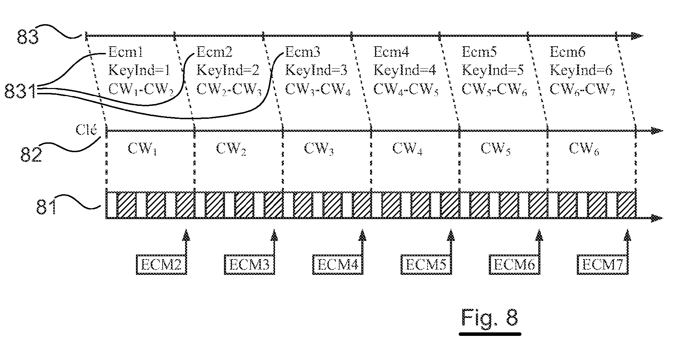

La figure 8 présente la synchronisation des messages de contrôle d'accès avec les AUs embrouillées pour les besoins de visualisation.

Un ensemble de flux 81 est émis, comprenant notamment les flux de données (Vidéo, Audio), mais aussi le flux contenant les messages IPMP.

Chaque AU est embrouillée par une clé courant CWi, représentée le long de l'axe 82. A chaque donnée est associé un Indicateur de Clés, KI, permettant d'identifier la clé à utiliser pour désembrouiller les données lors de leur réception.

Le premier ECM Ecm1 est issu de l'IOD.

Le dispositif d'émission émet en outre le flux IPMP 81 contenant l'ensemble des ECMs suivants représentés sur l'axe 83 : Ecm1, Ecm2, ..., Ecm6.

Ces Ecms sont émis à chaque fois qu'une nouvelle clé CW est générée.

Chaque ECMi 831 encapsule les indicateurs de chaque clé KeyInd = i ainsi que les clés courantes et les clés suivantes CWi et CWi+1.

Cette distribution des CW dans l'ECM correspond au besoin de la visualisation en continu d'un contenu. Pour les besoins de l'accès direct à un instant t dans le contenu, le procédé, décrit dans le brevet, ajoute les CW nécessaires au désembrouillage de toutes les AUs entre deux AUs de type I pour chacun des streams présents :
■ Soit les CW sont distribués dans un même ECM (liste de CW)
■ Soit ils sont répartis dans plusieurs ECMs en respectant la distribution courant-suivant dans l'ECM, comme indiqué ci-dessus.

### 3.3 Transport des ECMs

Le premier ECM (éventuellement de chaque flux) est transporté dans l'IOD (IPMP_Descriptor de l'ACS). Ceci permet aux Outils de désembrouillage de disposer rapidement de la première clé à utiliser.

Les ECMs suivants sont transportés dans un seul flux IPMP, identifié par l'IPMP_ES_ID défini dans l'IPMP_DescriptorPointer de l'ACS, quel que soit le niveau d'embrouillage contenu ou flux.

Ils devront être émis dans une même AU. Ils sont écrits dans un IPMP_Message dont le format est donné ci-après : aligned(8) expandable(228-1) class IPMP_Message

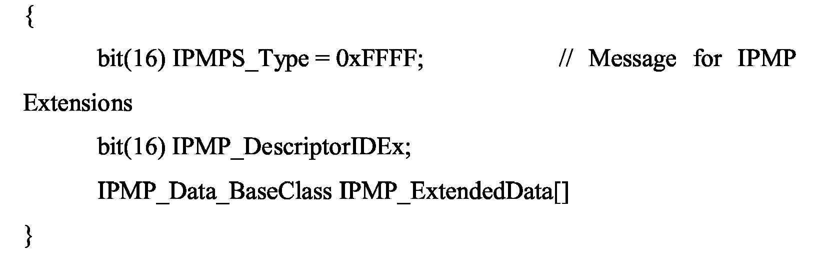

### 4. Messages utilisés dans le dispositif de restitution

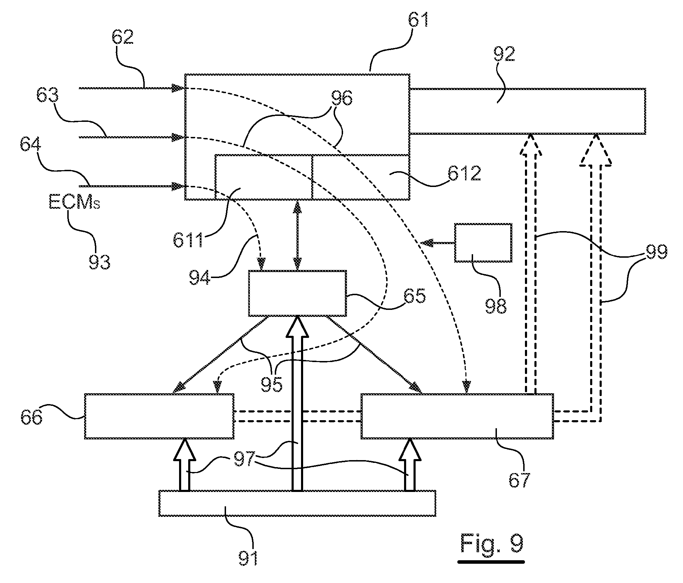

La figure 9 illustre l'échange de données par messages IPMP dans le dispositif de restitution 61 (« player »).

Le dispositif lit l'IOD 91 contenu dans le fichier de média. Selon les descripteurs lus et leurs emplacements dans l'arborescence de l'IOD, il instancie et configure les Outils "ACS" 65 et "Descrambler" 66, 67 en fonction des media présents (vidéo 62, audio 63, IPMP 64). L'action de l'IOD 91 sur les outils ACS et « Descrambler » 66, 67 est schématisée par les flèches 97.

A ce stade, le dispositif 61 demande la réception d'une licence pour obtenir la clé d'exploitation OPEK, unique pour un contenu. Elle est utilisée pour déchiffrer les CW des ECMs 93.

Un complément de messages autorise le dispositif à lire les flux entrants (vidéo 62, audio 63, IPMP 64). Ces flux sont lus en fonction des index temporels (« timestamps ») croissants véhiculés dans les AUs.

### 4.1 Lecture du flux IPMP

Le flux IPMP 64 contient un ou plusieurs messages de contrôle d'accès ECM 93 pour chaque cryptopériode de chacun des flux vidéo 62 et/ou audio 63.

Les ECM 93 contiennent des informations comme l'Indicateur de Clé KI, « l'ES_ID », « RefOPEK », « SaltKey », les clés en elles-mêmes CW, etc.

Ces messages sont dirigés vers le l'outil "ACS" 65 pour traitement via un message IPMPMessage (IPMP_KeyData) 94.

L'outil ACS 65 analyse le ou les messages 94:
■ Si un seul ECM 93 dans le champ KeyBody du message IPMP est transporté dans le flux IPMP 64
o L'ACS 65 isole les données :
■ KI (KeyIndicator) correspondant à la cryptopériode courante ;
■ ES_ID (identifiant du stream media associé) ;
o L'ACS 65 calcule le ou les CW de désembrouillage en appliquant la clé OPEK pour les déchiffrer : CW = f_{OPEK}(ECM). Les CW sont identifiés grâce aux informations : NB_CW, Size_CW :
■ Si l'ECM 93 transporte plusieurs CW (> 2), les premiers CW correspondent aux cryptopériodes précédant la cryptopériode courante; l'avant dernier CW est celui utilisé pour la cryptopériode courante avec l'indicateur KI, le dernier correspond à la cryptopériode suivante avec l'indicateur KI+1 ;
■ Si l'ECM 93 ransporte deux CW, le premier CW est celui utilisé pour la cryptopériode courante avec l'indicateur KI, le second correspond à la cryptopériode suivante avec l'indicateur KI+1 ;
o Pour chaque CW, l'ACS 65 construit un message IPMP_KeyData 95 vers le descrambler 66 ou 67 destinataire selon le media associé 62 ou 63 (par l'ES_ID). Ce message transporte :
■ l'indicateur de cryptopériode (KI) ;
■ le CW_{clair} ;
■ une clé de base appelée SaltKey (définie par ISMACryp).
Son format est le suivant :

| | |
|---|---|
| Format du champ "KeyBody" dans le message IPMPMessage_KeyData: | |
| | **KIValueLength**(1 byte) + **KIValue**(KIValueLength) + |
| | **MasterKeyValueLength**(1 byte) + **MasterKeyValue**(MasterKeyValueLength) + |
| | **SaltKeyValueLength**(1 byte) + **SaltKeyValue**(SaltKeyValueLength) |

o Les désembrouilleurs 66, 67 gèrent des tables contenant le couple de données KI-CW_{clair}. Lorsqu'un désembrouilleur reçoit une AU à désembrouiller, via les chemins 96, il s'initialise le CW associé à l'indicateur KI contenu dans l'entête de l'AU. Seul les données utiles des AUs sont présentées au désembrouilleur 66, 67 : la syntaxe de ces données est la suivante (98) : 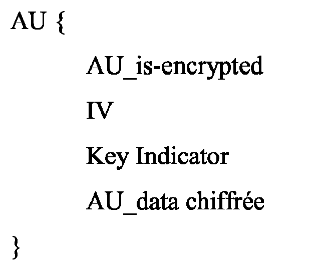 En retour, un message IPMP est émis vers le « Message Router » 611 pour présenter l'AU désembrouillée par les désembrouilleurs 66, 67 sans entête vers les décodeurs associés 92 (schématisé par les flèches 99) ;
■ Si plusieurs ECMs dans le champ KeyBody du message IPMP sont transportés dans le flux IPMP :
o Ce message contient un champ précisant le nombre d'ECMs transportés ;
o Selon le nombre d'ECMs, l'ACS 65 les traite indépendamment comme décrit ci-dessus.

### 4.2 Lecture des flux media.

Le dispositif reçoit les données embrouillées relatives aux flux vidéo et audio 62, 63. Le « Message Router » 611 et l'Outil « Tool Manager » 612 les dirigent vers l'Outil « Descrambler tool » associé, 66, 67. Ce transfert est schématisé par les flèches numérotées 99 sur la figure 9.

## Revendications

1. Procédé de transmission d'un ensemble de flux de données multimédia liés entre eux, chacun desdits flux étant formé d'unités élémentaires de données, ledit ensemble de flux comprenant :
- au moins un flux crypté (21), comprenant des unités élémentaires cryptées à l'aide de clés variant dans le temps, lesdites unités élémentaires comprenant :
- des unités élémentaires autonomes (211), codées de façon autonome, formant chacune un point d'accès direct audit flux ;
- des unités élémentaires intermédiaires, codées à partir d'une unité élémentaire autonome précédente ;
- au moins un flux de données de cryptage (23), formé d'unités élémentaires et délivrant lesdites clés,
**caractérisé en ce qu'**au moins certaines des unités élémentaires dudit flux de données de cryptage portent un ensemble de clés (231) comprenant au moins une clé courante et au moins une clé précédente, utilisée avant ladite clé courante.

2. Procédé de transmission selon la revendication 1, **caractérisé en ce que** ledit ensemble de clés porte toutes les clés précédentes (231) jusqu'à celle utilisée pour le cryptage de l'unité de données autonome la plus récente, pour chacun desdits flux.

3. Procédé de transmission selon l'une quelconque des revendications 1 et 2, **caractérisé en ce que** ledit ensemble de clés porte au moins une clé future, à utiliser après ladite clé courante.

4. Procédé de transmission selon l'une quelconque des revendications 1 à 3, **caractérisé en ce qu'**il comprend les étapes de :
- réception d'une demande d'accès direct à une position choisie par un utilisateur dans ledit ensemble de flux de données multimédia, émise par un terminal ;
- transmission partielle desdits flux, de façon à permettre audit terminal de restituer lesdits flux à partir de ladite position choisie.

5. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre du procédé de transmission selon l'une quelconque des revendications 1 à 4.

6. Procédé d'encodage d'un ensemble de flux de données multimédia liés entre eux, chacun desdits flux étant formé d'unités élémentaires de données, ledit ensemble de flux comprenant :
- au moins un flux crypté (21), comprenant des unités élémentaires cryptées à l'aide de clés variant dans le temps, lesdites unités élémentaires comprenant :
- des unités élémentaires autonomes (211), codées de façon autonome, formant chacune un point d'accès direct audit flux ;
- des unités élémentaires intermédiaires, codées à partir d'une unité élémentaire autonome précédente ;
- au moins un flux de données de cryptage (23), formé d'unités élémentaires et délivrant lesdites clés,
ledit procédé d'encodage comprenant une étape de cryptage des unités élémentaires d'au moins un desdits flux et une étape de construction des unités élémentaires dudit flux de données de cryptage,
**caractérisé en ce que** ladite étape de construction associe, au moins à certaines des unités élémentaires dudit flux de données de cryptage, un ensemble de clés (231) comprenant au moins une clé courante et au moins une clé précédente, utilisée avant ladite clé courante.

7. Procédé d'encodage selon la revendication 6, **caractérisé en ce que** ladite étape de construction met en oeuvre une étape de mise à jour d'une liste de clés pour ledit ensemble de clés, chaque fois que ladite étape de cryptage crypte une unité élémentaire autonome et/ou qu'une nouvelle clé courante est mise en oeuvre.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre du procédé d'encodage selon l'une quelconque des revendications 5 à 7.

9. Signal multimédia comprenant un ensemble de flux de données multimédia liés entre eux, chacun desdits flux étant formé d'unités élémentaires de données, ledit ensemble de flux comprenant :
- au moins un flux crypté, comprenant des unités élémentaires cryptées à l'aide de clés variant dans le temps, lesdites unités élémentaires comprenant :
- des unités élémentaires autonomes, codées de façon autonome, formant chacune un point d'accès direct audit flux ;
- des unités élémentaires intermédiaires, codées à partir d'une unité élémentaire autonome précédente ;
- au moins un flux de données de cryptage, formé d'unités élémentaires et délivrant lesdites clés,
**caractérisé en ce qu'**au moins certaines des unités élémentaires dudit flux de données de cryptage portent un ensemble de clés comprenant au moins une clé courante et au moins une clé précédente, utilisée avant ladite clé courante.

10. Signal multimédia selon la revendication 9, **caractérisé en ce que** chacune desdites unités élémentaires dudit flux de données de cryptage comprend :
- un indice représentatif de la clé courante et/ou de la période de cryptage courante ;
- le nombre de clés présentes dans ledit ensemble de clés ;
- ledit ensemble de clés.

11. Support de données portant au moins un signal multimédia comprenant un ensemble de flux de données multimédia liés entre eux, chacun desdits flux étant formé d'unités élémentaires de données, ledit ensemble de flux comprenant :
- au moins un flux crypté, comprenant des unités élémentaires cryptées à l'aide de clés variant dans le temps, lesdites unités élémentaires comprenant :
- des unités élémentaires autonomes, codées de façon autonome, formant chacune un point d'accès direct audit flux ;
- des unités élémentaires intermédiaires, codées à partir d'une unité élémentaire autonome précédente ;
- au moins un flux de données de cryptage, formé d'unités élémentaires et délivrant lesdites clés,
**caractérisé en ce qu'**au moins certaines des unités élémentaires dudit flux de données de cryptage portent un ensemble de clés comprenant au moins une clé courante et au moins une clé précédente, utilisée avant ladite clé courante.

12. Procédé de réception d'un ensemble de flux de données multimédia liés entre eux, chacun desdits flux étant formé d'unités élémentaires de données, ledit ensemble de flux comprenant :
- au moins un flux crypté, comprenant des unités élémentaires cryptées à l'aide de clés variant dans le temps, lesdites unités élémentaires comprenant :
- des unités élémentaires autonomes, codées de façon autonome, formant chacune un point d'accès direct audit flux ;
- des unités élémentaires intermédiaires, codées à partir d'une unité élémentaire autonome précédente ;
- au moins un flux de données de cryptage, formé d'unités élémentaires et délivrant lesdites clés,
**caractérisé en ce qu'**il comprend les étapes de :
- demande d'accès direct à une position choisie par un utilisateur dans ledit ensemble de flux de données multimédia ;
- réception d'unités élémentaires dudit flux de données de cryptage, au moins certaines d'entre elles portant un ensemble de clés comprenant au moins une clé courante et au moins une clé précédente, utilisée avant ladite clé courante ;
- décryptage, pour au moins un desdits flux cryptés, d'au moins une unité élémentaire précédant l'unité élémentaire courante, à l'aide d'une desdites clés précédentes.

13. Procédé de réception selon la revendication 12, **caractérisé en ce que** ladite étape de décryptage assure, pour au moins un desdits flux cryptés, le décryptage de l'unité élémentaire autonome précédente la plus proche de ladite position choisie, et de toutes les unités élémentaires suivantes jusqu'à ladite position choisie et au-delà.

14. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre du procédé de réception selon l'une quelconque des revendications 12 et 13.

15. Dispositif de restitution d'un ensemble de flux de données multimédia liés entre eux, chacun desdits flux étant formé d'unités élémentaires de données, ledit ensemble de flux comprenant :
- au moins un flux crypté, comprenant des unités élémentaires cryptées à l'aide de clés variant dans le temps, lesdites unités élémentaires comprenant :
- des unités élémentaires autonomes, codées de façon autonome, formant chacune un point d'accès direct audit flux ;
- des unités élémentaires intermédiaires, codées à partir d'une unité élémentaire autonome précédente ;
- au moins un flux de données de cryptage, formé d'unités élémentaires et délivrant lesdites clés,
**caractérisé en ce qu'**il comprend :
- des moyens de demande d'accès direct à une position choisie par un utilisateur dans ledit ensemble de flux ;
- des moyens de réception et/ou de lecture d'unités élémentaires dudit flux de données de cryptage, au moins certaines d'entre elles portant un ensemble de clés comprenant au moins une clé courante et au moins une clé précédente, utilisée avant ladite clé courante, et
- des moyens de décryptage, pour au moins un desdits flux cryptés, d'au moins une unité élémentaire précédant l'unité élémentaire courante, à l'aide d'une desdites clés précédentes.
